# EUROPÄISCHE PATENTSCHRIFT

(11) **EP 2 705 336 B1**
(45) Veröffentlichungstag und Bekanntmachung des Hinweises auf die Patenterteilung: **14.10.2020**
(21) Anmeldenummer: 12718121.2
(22) Anmeldetag: 16.04.2012
(51) Int. Cl.: G01F 23/296

(54) **VERFAHREN ZUM BETREIBEN EINER VORRICHTUNG ZUR BESTIMMUNG UND/ODER ÜBERWACHUNG MINDESTENS EINER PHYSIKALISCHEN PROZESSGRÖSSE**
METHOD FOR OPERATING A DEVICE FOR DETERMINING AND/OR MONITORING AT LEAST ONE PHYSICAL PROCESS VARIABLE
PROCÉDÉ D'OPÉRATION D'UN DISPOSITIF POUR LA DÉTERMINATION ET/OU LA SURVEILLANCE D'AU MOINS UNE GRANDEUR PHYSIQUE

(30) Priorität: 03.05.2011 DE 102011075113
(43) Veröffentlichungstag der Anmeldung: 12.03.2014
(73) Patentinhaber: Endress+Hauser SE+Co. KG, 79689 Maulburg (DE); Karlsruher Institut für Technologie (KIT), 76131 Karlsruhe (DE)
(72) Erfinder: BRENGARTNER, Tobias, 79312 Emmendingen (DE); URBAN, Martin, 79541 Lörrach (DE); SIEGEL, Michael, 76185 Karlsruhe (DE)
(74) Vertreter: Andres, Angelika Maria
(86) Internationale Anmeldenummer: PCT/EP2012/056876
(87) Internationale Veröffentlichungsnummer: WO 2012/150118

(56) Entgegenhaltungen:
- WO-A1-01/51898
- WO-A1-2011/038985
- GB-A- 2 350 004

## Beschreibung

Die vorliegende Erfindung betrifft ein Verfahren zum Betreiben einer Vorrichtung zur Bestimmung und/oder Überwachung mindestens einer physikalischen Prozessgröße eines Mediums mit einer schwingfähigen Einheit, sowie eine Vorrichtung zur Durchführung des Verfahrens. Bei der schwingfähigen Einheit handelt es sich beispielsweise um eine Schwinggabel, einen Einstab, oder eine Membran zum Einbringen in ein Medium. Mit einer eine derartige schwingfähige Einheit aufweisenden Vorrichtung lassen sich der Füllstand, die Dichte, und/oder die Viskosität eines Mediums bestimmen. Die schwingfähige Einheit kann ebenso als schwingfähiges Rohr ausgebildet sein, welches von dem Messmedium durchflossen wird und mittels welchem Prozessgrößen wie Durchfluss, Dichte, oder Viskosität messbar sind. Eine Vorrichtung, welche eines oder mehrere derartiger Rohre umfasst, ist beispielsweise ein Coriolis-Durchflussmessgerät.

Zur Bestimmung von Prozessgrößen eines Mediums in einem Behälter sind unter anderem vibronische Messgeräte bekannt. Diese bietet die Anmelderin in einer Vielzahl an Ausgestaltungen unter der Bezeichnung Liquiphant für Flüssigkeiten und Soliphant für Schüttgüter an. Derartige vibronische Messgeräte weisen eine schwingfähige Einheit in Form einer Schwinggabel, welche aus einer Membran und zwei von dieser aus in das Medium ragenden Paddeln besteht, bzw. in Form eines schwingfähigen Stabes auf. Die schwingfähige Einheit wird zu resonanten Schwingungen angeregt und eine Veränderung der Schwingfrequenz und/oder die Amplitude der Schwingungen und/oder die Phase zwischen dem Sendesignal und dem Empfangssignal in Bezug auf die Prozessgröße, vornehmlich ein Grenzfüllstand oder die Dichte des Messmediums, ausgewertet. Im Fall eines vibronischen Grenzstandschalters für Flüssigkeiten wird beispielsweise zwischen dem Freizustand, d.h. einer frei schwingenden Schwinggabel, und dem Bedecktzustand, d.h. einer von Medium bedeckten Schwinggabel, an Hand der für die beiden Zustände unterschiedlichen Resonanzfrequenzen unterschieden. Weiterhin sind mit einer derartigen Vorrichtung aber auch Dichte und Viskosität des Mediums bestimmbar oder eine Phasengrenze detektierbar.

Weitere vibronische Messgeräte sind aus der Durchflussmessung bekannt. Hier wird ein schwingfähiges Rohr als Zwischenstück in eine von Medium durchflossene Rohrleitung eingebracht und zu Schwingungen angeregt. Über den Corioliseffekt ist die Durchflussgeschwindigkeit bestimmbar. Aus dem Schwingverhalten sind jedoch auch Aussagen über Dichte und Viskosität des Mediums ableitbar.

Die Anregung zu mechanischen Schwingungen erfolgt meist mittels eines piezoelektrischen Antriebes, bei welchem mindestens ein mit der schwingfähigen Einheit gekoppeltes piezoelektrisches Element mit einem elektrischen Sendesignal beaufschlagt wird, welches es in ein mechanisches Signal umsetzt. Umgekehrt können die mechanischen Schwingungen der schwingfähigen Einheit mittels einer piezoelektrischen Empfangseinheit in auswertbare elektrische Signale umgewandelt werden. Oftmals sind Antriebseinheit und Empfangseinheit als kombinierte Antriebs-/ Empfangseinheit ausgestaltet und zusammen mit einer Regel-/Auswerteeinheit in einem Regelkreis angeordnet. Dieser Regelkreis regelt das Sendesignal derart, dass eine vorgebbare Phase zwischen Sendesignal und Empfangssignal vorliegt.

In der Offenlegungsschrift DE 102009026685 A1 ist ein alternatives Verfahren zur digital gesteuerten Anregung der schwingfähigen Einheit zu mechanischen Schwingungen offenbart. Im Gegensatz zu der analogen Ausgestaltung erfolgt bei dieser weitgehend digitalen Lösung eine Zwangsanregung mit einer bestimmten Frequenz. Um diejenige Messfrequenz aufzufinden, bei welcher die vorgegebene Phasenverschiebung zwischen Empfangssignal und Sendesignal besteht, wird ein so genannter Frequenzsweep durchgeführt. Bei einem Frequenzsweep wird die schwingfähige Einheit innerhalb eines bestimmten Frequenzbands im Arbeitsbereich des Sensors sukzessive mit diskreten, dicht beieinander liegenden Frequenzen zu Schwingungen angeregt und die der vorgegebenen Phasenverschiebung entsprechende Frequenz ermittelt. Die DE 102009028022 A1 beschreibt eine vorteilhafte Weiterbildung des Frequenzsweeps, welche die Auswertung des Empfangssignals zum Auffinden der Messfrequenz vereinfacht, indem das Empfangssignal phasenselektiv nur zu bestimmten Zeitpunkten abgetastet und ausgewertet wird.

Ein Problem tritt bei den genannten Verfahren dann auf, wenn die für den Frequenzsweep zur Verfügung stehende Zeit nur gering ist. Je schneller das Frequenzband bei konstanter Anzahl an angeregten Frequenzen durchlaufen wird, desto geringer ist die Zeit, welche dem Schwingsystem zur Verfügung steht um sich auf die neu vorgegebene Frequenz einzustellen. Hierdurch treten Überlagerungseffekte auf, welche dazu führen, dass die vorgegebene Phasenverschiebung bei einer von der eigentlich gesuchten Messfrequenz verschiedenen Frequenz auftritt und die Messfrequenz somit nicht korrekt ermittelbar ist.

Die Aufgabe der Erfindung besteht darin, ein Verfahren anzugeben, welches das Auffinden einer Messfrequenz schnell und mit hoher Genauigkeit ermöglicht.

Die Aufgabe wird gelöst durch ein Verfahren zum Betreiben einer Vorrichtung zur Bestimmung und/oder Überwachung mindestens einer physikalischen Prozessgröße eines Mediums mit einer schwingfähigen Einheit, wobei die schwingfähige Einheit mittels eines ersten Frequenzsuchlaufs innerhalb eines vorbestimmten Frequenzbandes im Arbeitsbereich der schwingfähigen Einheit in Form von Sendesignalen mit aufeinanderfolgenden diskreten Erregerfrequenzen aufsteigender oder absteigender Frequenz zu Schwingungen angeregt wird, wobei die entsprechenden Schwingungen der schwingfähigen Einheit in Form von Empfangssignalen empfangen werden und wobei eine erste Erregerfrequenz ermittelt wird, bei welcher während des ersten Frequenzsuchlaufs mindestens ein vorgebbares Kriterium erfüllt ist, wobei die schwingfähige Einheit mittels eines zweiten Frequenzsuchlaufs innerhalb des vorbestimmten Frequenzbandes in Form von Sendesignalen mit den gleichen aufeinander folgenden diskreten Erregerfrequenzen zu Schwingungen angeregt wird, wobei das Frequenzband verglichen mit dem ersten Frequenzsuchlauf in entgegengesetzter Richtung durchlaufen wird, wobei die entsprechenden Schwingungen der schwingfähigen Einheit in Form von Empfangssignalen empfangen werden und wobei eine zweite Erregerfrequenz ermittelt wird, bei welcher während des zweiten Frequenzsuchlaufs das mindestens eine vorgebbare Kriterium erfüllt ist, und wobei aus der ersten Erregerfrequenz und der zweiten Erregerfrequenz durch Mittelwertbildung eine Messfrequenz zur Bestimmung und/oder Überwachung mindestens einer Prozessgröße bestimmt wird.

Unter der Messfrequenz ist diejenige Frequenz zu verstehen, welche für die Bestimmung und/oder Überwachung mindestens einer Prozessgröße von Relevanz ist. Für die Bestimmung der Prozessgröße wird entweder der Wert der Messfrequenz selbst oder das bei Anregung der schwingfähigen Einheit mit der Messfrequenz empfangene Empfangssignal ausgewertet. Weiterhin können sowohl die Messfrequenz als auch das bei der Messfrequenz aufgenommene Empfangssignal ausgewertet werden.

Erfindungsgemäß werden zwei Frequenzsuchläufe hintereinander durchgeführt und die Ergebnisse miteinander verknüpft. Das Frequenzband wird hierzu einmal mit Frequenzen aufsteigender Höhe und einmal mit Frequenzen absteigender Höhe durchlaufen. Es spielt hierbei keine Rolle, ob das Frequenzband zuerst in absteigender oder aufsteigender Richtung durchlaufen wird. Die Parameter der beiden Frequenzsuchläufe sollten hierbei im Wesentlichen identisch sein, d.h. die gleichen Frequenzen werden angeregt, die Abtastrate ist konstant und die Dauer der Frequenzsuchläufe ist gleich, sodass zwischen der Anregung zweier aufeinander folgenden Frequenzen jeweils der gleiche zeitliche Abstand liegt. Die beiden Frequenzsuchläufe unterscheiden sich somit nur in der Richtung, in welcher die Frequenzabfolge durchfahren wird. Die Abtastung und Auswertung der einzelnen Frequenzsuchläufe kann in aus dem Stand der Technik bekannter Weise erfolgen.

Die als Mittelwert der beiden ermittelten Erregerfrequenzen bestimmte Messfrequenz ist unabhängig von Amplituden- oder Phasenfehlern, welche durch Schwebungseffekte im Empfangssignal eines Sweeps auftreten. Die Fehler bei der Bestimmung der Erregerfrequenz in einem Aufwärtssweep und einem Abwärtssweep kompensieren sich bei der Mittelwertbildung, sodass die Messfrequenz zuverlässig und mit hoher Genauigkeit bestimmbar ist. Die Genauigkeit ist hierbei nicht von der für den ersten bzw. zweiten Frequenzsuchlauf benötigten Zeit abhängig, sodass die Bestimmung der Messfrequenz ohne Einbußen der Genauigkeit auch in kürzester Zeit ermittelbar ist. Da die dynamischen Eigenschaften des Sensors kompensiert werden, ist die erzielbare Genauigkeit lediglich durch die Frequenzschrittweite bestimmt und somit einstellbar.

Ein weiterer Vorteil des Verfahrens liegt darin, dass bei kontinuierlicher Anregung mit Frequenzsuchläufen durch die sich an einen bestimmten Frequenzsuchlauf anschließende Anregung mit Frequenzen in umgekehrter Reihenfolge keine großen Sprünge in der Anregungsfrequenz auftreten und die Anforderungen an die elektronischen Bauteile, wie beispielsweise adaptive Filter, somit entsprechend geringer sein können. Das Verfahren spart somit nicht nur Zeit bei der Durchführung der Messung, sondern auch Kosten bei den eingesetzten Bauteilen.

Das Verfahren ist prinzipiell für alle Messgeräte vom Vibrationstyp anwendbar. Diese umfassen sowohl Füllstandsmessgeräte, Dichtemessgeräte und Viskositätsmessgeräte, als auch Durchflussmessgeräte.

In einer ersten Ausgestaltung der erfindungsgemäßen Lösung wird als Messfrequenz die Resonanzfrequenz oder eine Frequenz, bei welcher eine vorgebbare Phasenverschiebung zwischen Sendesignal und Empfangssignal vorliegt, insbesondere die Eigenfrequenz der schwingfähigen Einheit, ermittelt. Die Eigenfrequenz entspricht der Frequenz, bei welcher eine Phasenverschiebung von 90° vorliegt.

Gemäß einer Weiterbildung des erfindungsgemäßen Verfahrens werden als Kriterium für die Bestimmung der ersten Erregerfrequenz und der zweiten Erregerfrequenz das Vorliegen einer maximalen oder minimalen Amplitude und/oder einer bestimmten Phasenverschiebung zwischen dem Sendesignal und dem Empfangssignal vorgegeben.

Bei einer weiteren Weiterbildung der Erfindung wird die Differenz zwischen der ersten Erregerfrequenz und der zweiten Erregerfrequenz ermittelt und aus der Differenz zwischen der ersten Erregerfrequenz und der zweiten Erregerfrequenz der Dämpfungsgrad der Schwingungen bestimmt.

Gemäß einer Ausgestaltung der Erfindung wird aus dem Dämpfungsgrad der Schwingungen die Viskosität des Mediums bestimmt. Die Zuordndung erfolgt an Hand eines hinterlegten Zusammenhangs zwischen Dämpfungsgrad und Viskosität und/oder zwischen Frequenzdifferenz und Viskosität.

Eine Ausgestaltung des Verfahrens beinhaltet, dass an Hand des Dämpfungsgrades bei einer Schwingung in Luft ermittelt wird, ob Ansatz an der schwingfähigen Einheit anhaftet oder ob die schwingfähige Einheit von Korrosion betroffen ist. Ob die schwingfähige Einheit in Luft schwingt, kann beispielsweise an Hand der Eigenfrequenz oder Resonanzfrequenz festgestellt werden.

Eine Ausgestaltung der Erfindung sieht vor, dass der zeitliche Verlauf des Dämpfungsgrades überwacht wird, und hieraus eine Änderung der Viskosität oder eine Ansatzbildung oder Korrosionsbildung detektiert wird.

In einer Weiterbildung des Verfahrens wird die schwingfähige Einheit nach dem Bestimmen der Messfrequenz zur Bestimmung und/oder Überwachung mindestens einer Prozessgröße zu Schwingungen mit der Messfrequenz angeregt. In diesem Fall dienen die Frequenzsweeps in erster Linie der Bestimmung der Messfrequenz, mit welcher die schwingfähige Einheit im Anschluss an die Sweeps zumindest während einer gewissen Zeitdauer angeregt wird. Durch die Anregung mit nur einer bestimmten Frequenz treten keine Überlagerungen verschiedenfrequenter Schwingungen auf, sodass das hierbei empfangene Empfangssignal repräsentativ für die mindestens eine zu bestimmende Prozessgröße ist.

Eine alternative Ausgestaltung beinhaltet, dass nach dem Bestimmen der Messfrequenz die Messfrequenz in Bezug auf mindestens eine Prozessgröße ausgewertet wird und ein nächster erster und zweiter Frequenzsuchlauf zur erneuten Ermittlung der Messfrequenz durchgeführt werden. Kann die Prozessgröße bereits aus der Messfrequenz ermittelt werden, ist eine Unterbrechung der Anregung mittels Frequenzsuchläufen nicht erforderlich. Durch die kontinuierliche Durchführung der Frequenzsuchläufe mit Bestimmung der Messfrequenz wird stets die aktuelle Messfrequenz ermittelt.

In einer Ausgestaltung der Erfindung wird als Prozessgröße mindestens eine der Größen aus der Gruppe gebildet aus Füllstand, Dichte, Viskosität, Massedurchfluss und Volumendurchfluss bestimmt und/oder überwacht.

Weiter wird die der Erfindung zugrunde liegende Aufgabe gelöst durch eine Vorrichtung zur Durchführung des erfindungsgemäßen Verfahrens, mit einer mechanisch schwingfähigen Einheit, mit einer Antriebs-/Empfangseinheit, welche die schwingfähige Einheit mittels Sendesignalen zu mechanischen Schwingungen anregt und Schwingungen von der schwingfähigen Einheit empfängt und in elektrische Empfangssignale umwandelt, und mit einer Elektronikeinheit, welche zumindest die Empfangssignale auswertet. Derartige Vorrichtungen zur Bestimmung einer oder mehrerer Prozessgrößen eines Mediums sind unter der Bezeichnung Vibrationsmessgerät bekannt. Bei einer ersten Gruppe von Messgeräten ist die schwingfähige Einheit zumindest zeitweise in das Medium eingetaucht und beispielsweise als Schwinggabel, Membran, Stab, oder geschlossenes Rohr ausgestaltet. Bei einer zweiten Gruppe handelt es sich bei der schwingfähigen Einheit beispielsweise um ein oder mehrere Rohre, welche zumindest zeitweise von dem Medium durchflossen werden.

WO 2011/038985 offenbart ein Verfahren zur Bestimmung und/oder Überwachung mindestens einer physikalischen Prozessgröße eines Mediums mit einer schwingfähigen Einheit, die mittels eines Frequenzsuchlaufs innerhalb eines vorbestimmten Frequenzbandes mittels Sendesignalen sukzessive mit aufeinander folgenden diskreten Erregerfrequenzen zu Schwingungen angeregt wird. WO 01/51898 offenbart ein Gerät zur Dichtemessung, welches eine Resonanzfrequenz und eine Frequenz bei halber Amplitude in einem auf- und einem absteigenden Frequenzsuchlauf ermittelt.

Die Erfindung wird anhand der nachfolgenden Figuren näher erläutert. Es zeigen:
- Fig. 1: ein vibronisches Füllstandsmessgerät in schematischer Darstellung;
- Fig. 2: eine schematische Darstellung eines vibronischen Durchflussmessgeräts;
- Fig. 3: ein Amplituden-Frequenz-Diagramm der Empfangssignale eines Aufwärts- und Abwärtssweeps;
- Fig. 4: ein Flussdiagramm einer Ausgestaltung des Verfahrens;
- Fig. 5: ein Frequenz-Dämpfungsgrad-Diagramm.

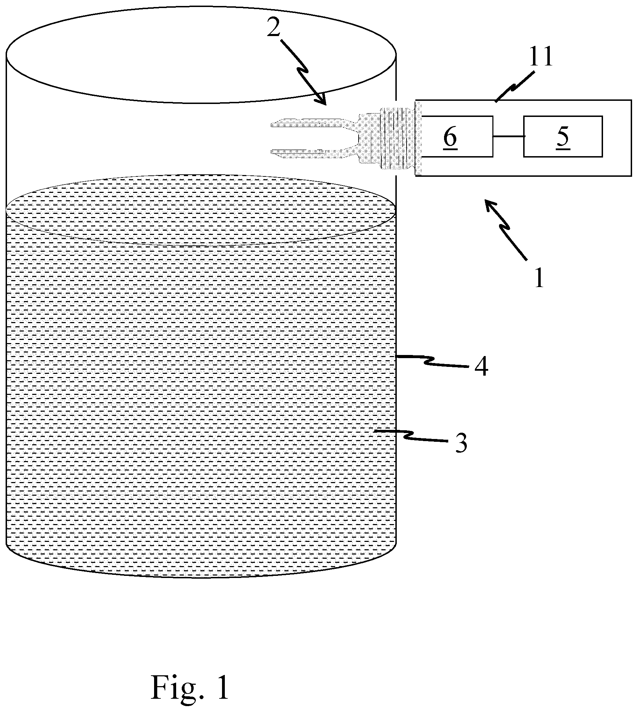

In Fig. 1 ist eine so genannte Schwinggabel als Beispiel für ein vibronisches Füllstandsmessgerät 1 dargestellt, mit welchem auch Dichte und/oder Viskosität des Mediums 3 messbar sind. Die schwingfähige Einheit 2 wird von einer Membran und zwei Paddeln gebildet, wobei die Paddel symmetrisch auf der Membran angeordnet sind. Die Membran verschließt endseitig ein rohrförmiges Gehäuse 11, in welchem beispielsweise die Antriebs-/Empfangseinheit 6 zum Erzeugen und Empfangen der mechanischen Schwingungen der schwingfähigen Einheit 2, sowie eine Elektronikeinheit 5 zur Regelung und/oder Steuerung der Schwingungsanregung und zur Auswertung der Empfangssignale und Bestimmung der Prozessgrößen angeordnet sind. Vorzugsweise handelt es sich bei der Antriebs-/Empfangseinheit 6 um einen elektromechanischen Wandler, insbesondere einen piezoelektrischen Stapelantrieb, welcher mit der Innenseite der Membran in Kontakt steht und so die schwingfähige Einheit 2 zu Schwingungen anregt.

Das Füllstandsmessgerät 1 ist auf einer zu überwachenden Füllstandshöhe in die Wandung des Behälters 4 eingebracht. In dieser Ausführung wird ein maximaler Füllstand überwacht; die Überwachung eines minimalen Füllstands, beispielsweise als Trockenlaufschutz für nachfolgende Pumpen, ist jedoch ebenfalls möglich. Bevor der Füllstand des Mediums 3 diese Höhe erreicht schwingt die schwingfähige Einheit 2 in Luft, bei Erreichen und Überschreiten dieser Füllstandshöhe ist die schwingfähige Einheit 2 von Medium 3 bedeckt. Dies hat eine Änderung der Resonanzfrequenz und auch der Eigenfrequenz zur Folge. Eine derartige Änderung wird zur Füllstandsüberwachung detektiert. Die dargestellte Vorrichtung 1 kann gleichermaßen als Dichte- und/oder Viskositätsmessgerät eingesetzt werden, da Dichte und Viskosität ebenfalls Einfluss auf die Schwingungscharakteristik besitzen. Der Bedeckungsgrad der schwingfähigen Einheit 2 mit dem Prozessmedium 3 sollte zur Bestimmung dieser beiden Prozessgrößen jedoch bekannt sein.

Mit dem erfindungsgemäßen Verfahren lässt sich die Messfrequenz schnell und präzise ermitteln. Hierzu werden zwei Frequenzsuchläufe mit gleichen Parametern durchgeführt, indem ein vorgegebenes Frequenzband mit einer Vielzahl an diskreten aufeinanderfolgenden Frequenzen zur Anregung der mechanisch schwingfähigen Einheit durchschritten wird. Die Frequenz des Sendesignals wird also fortlaufend geändert. Die beiden Frequenzsuchläufe unterscheiden sich lediglich in der Richtung des Durchfahrens des vorgegebenen Frequenzbandes.

Ziel der beiden Frequenzsuchläufe ist die Ermittlung jeweils einer bestimmten Erregerfrequenz f₁, f₂, welche mindestens einem vorgebbaren Kriterium genügt. Das Kriterium ist derart gewählt, dass zwei korrespondierende Frequenzen ermittelt werden. Korrespondierend bezieht sich darauf, dass die Empfangssignale der Frequenzsuchläufe symmetrisch sind und sich daher in Amplitude und relativer Lage im jeweiligen Empfangssignal einander entsprechende Punkte bestimmen lassen. Diese korrespondierenden Frequenzen weisen betragsmäßig die gleiche Differenz zu der Frequenz auf, welche die Symmetrieachse bestimmt und der gesuchten Messfrequenz entspricht. Durch Mittelwertbildung wird aus den beiden Erregerfrequenzen f₁, f₂ die Messfrequenz fₘ bestimmt.

In einer Ausgestaltung wird die Eigenfrequenz des Systems ermittelt. Hierzu wird an Hand der beiden Sweeps jeweils eine Frequenz f₁, f₂ bestimmt, bei welcher Sendesignal und Empfangssignale während des Sweeps eine bestimmte Phasenverschiebung zueinander aufweisen. Der Mittelwert dieser beiden Erregerfrequenzen f₁, f₂ gibt dann die tatsächliche Messfrequenz fₘ an, bei welcher die vorgegebene Phasenverschiebung unabhängig von einem Sweep vorliegt. Die so bestimmte Eigenfrequenz kann als Erregerfrequenz festgesetzt werden, sodass die schwingfähige Einheit nachfolgend zumindest für eine bestimmte Zeitdauer mit der Eigenfrequenz angeregt wird. Dies ermöglicht beispielsweise die Bestimmung und Auswertung der zugehörigen Amplitude.

In der Regel wird die Phasenverschiebung zu 90° vorgegeben, um die schwingfähige Einheit mit der Eigenfrequenz anzuregen und den Füllstand oder die Dichte zu bestimmen. Eine hohe Viskosität kann die Messung jedoch beeinflussen. Damit die Viskosität keine Störgröße darstellt, kann eine von 90° verschiedene Phasenverschiebung vorgegeben werden, welche beispielsweise zwischen 40° und 70° liegt.

In einer alternativen Ausgestaltung wird mittels des erfindungsgemäßen Verfahrens die aktuelle Resonanzfrequenz bestimmt. Nachfolgend kann das Verfahren wiederholt werden, sodass ständig die aktuelle Resonanzfrequenz bestimmt wird. Diese kann im Hinblick auf eine zu bestimmende oder überwachende Prozessgröße ausgewertet werden, beispielsweise den Füllstand des Mediums 3.

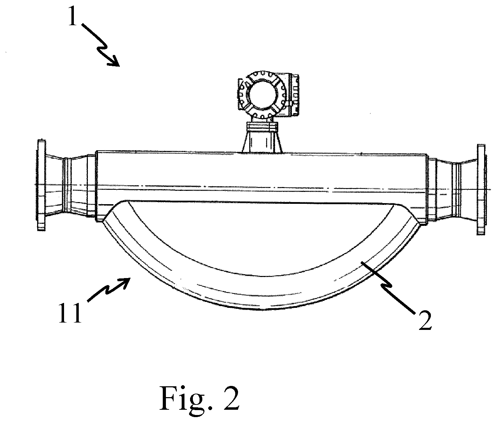

Fig. 2 zeigt einen Messaufnehmer vom Coriolistyp, mittels welchem der Durchfluss, die Dichte und/oder die Viskosität eines Mediums bestimmbar sind. Ein derartiges Messgerät 1 wird als Zwischenstück druckdicht in eine Rohrleitung eingebracht, beispielsweise mittels Flanschen. Die schwingfähige Einheit 2 ist ein Messrohr, welches zumindest zeitweise von Medium durchflossen wird. Gleichermaßen kann die schwingfähige Einheit 2 mehrere Messrohre umfassen. Zur Messung wird das Messrohr mit der Resonanzfrequenz zu Schwingungen angeregt. Die Regelung der Messfrequenz erfolgt üblicherweise mit einer PLL (Phase Locked Loop). Mit Hilfe des erfindungsgemäßen Verfahrens ist die Resonanzfrequenz des Systems auffindbar, sodass diese als Startfrequenz für die PLL festsetzbar ist. Hierdurch wird vermieden, dass sich die PLL an Stelle der Resonanzfrequenz auf eine Störfrequenz einregelt.

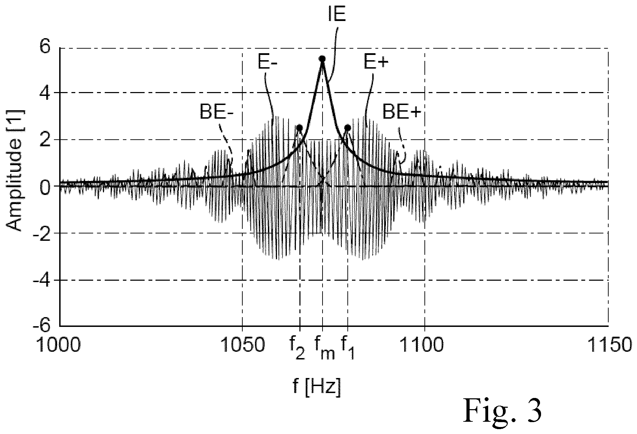

Fig. 3 zeigt ein Amplituden-Frequenz-Diagramm mit aufgenommenen und berechneten Signalen. In diesem Diagramm sind das Empfangssignal E⁺ eines ersten Frequenzsuchlaufs und das Empfangssignal E⁻ eines zweiten Frequenzsuchlaufs dargestellt. Die zu diesen Empfangssignalen E⁺, E⁻ führenden mechanischen Schwingungen der schwingfähigen Einheit 2 sind im Wesentlichen ungedämpft. Bei dem ersten Frequenzsuchlauf wurde das Frequenzband mit aufsteigender Frequenz durchfahren, während die Frequenzen im zweiten Frequenzsuchlauf in absteigender Richtung angeregt wurden. Weiterhin dargestellt ist der Betrag des idealen Kurvenverlaufs des Empfangssignals IE, welcher vorliegt, wenn keine Modulationen auf Grund von sich überlagernden Schwingungen auftreten. Der Peak liegt bei der Resonanzfrequenz.

Darüber hinaus ist für die beiden Frequenzsuchläufe ein aus dem jeweiligen Empfangssignal E⁺, E⁻ berechnetes Signal BE⁺, BE⁻ dargestellt, dessen Maxima Frequenzen zugeordnet sind, bei welchen das Empfangssignal E⁺, E⁻ und das Sendesignal eine vorgegebene Phasenverschiebung relativ zueinander aufweisen.

Je geringer die Sweepzeit, d.h. die Dauer, welche für einen Frequenzsuchlauf bei einem vorgegebenen Abstand der anzuregenden Frequenzen für das Durchfahren des vorgegebenen Frequenzbandes zur Verfügung steht, desto stärker weichen die Empfangssignale E⁺, E⁻ von dem idealen Signal IE ab. Dies ist auf Schwebungen im Empfangssignal E⁺, E⁻ zurückzuführen, welche zu einer Verfälschung der Amplituden- und Phaseninformation führen. Die maximale Amplitude des Empfangssignals E⁺, E⁻ tritt daher nicht bei der tatsächlichen Resonanzfrequenz auf. Ebenso verschiebt sich ein Punkt mit einer bestimmten Phasenschiebung zwischen Sendesignal und Empfangssignal, wie an den markierten Hauptmaxima der berechneten Signale BE⁺, BE⁻ zu sehen ist.

Die dargestellten Empfangssignale E⁺, E⁻ des ersten Frequenzsuchlaufs und des zweiten Frequenzsuchlaufs sind spiegelsymmetrisch zu einer Geraden, welche parallel zur Ordinate verläuft und die Abszisse in der Resonanzfrequenz schneidet. Die korrekte Resonanzfrequenz kann daher bestimmt werden, indem der Mittelwert der beiden Frequenzen gebildet wird, bei welchen bei dem aufsteigenden und absteigenden Frequenzsuchlauf die Maxima in den Empfangssignalen E⁺, E⁻ auftreten.

Um zwei korrespondierende Erregerfrequenzen f₁, f₂ aus dem ersten Frequenzsuchlauf und dem zweiten Frequenzsuchlauf zu ermitteln, wird mindestens ein Kriterium festgesetzt, welches das Empfangssignal E⁺, E⁻ oder ein aus dem Empfangssignal E⁺, E⁻ abgeleitetes Signal BE⁺, BE⁻ alleine oder in Verbindung mit dem Sendesignal oder einem aus diesem abgeleiteten Signal erfüllen muss. Zwei korrespondierende Erregerfrequenzen f₁, f₂ weisen die gleiche Differenz zu der gesuchten Messfrequenz fₘ auf, wobei sich die Differenz im Vorzeichen unterscheidet. Der Mittelwert aus der ersten Erregerfrequenz f₁ und der zweiten Erregerfrequenz f₂ entspricht daher der gesuchten Messfrequenz fₘ.

Ist die Resonanzfrequenz die gesuchte Messfrequenz fₘ, wird vorzugsweise jeweils diejenige Frequenz als erste Erregerfrequenz f₁ bzw. zweite Erregerfrequenz f₂ ermittelt, bei welcher das jeweilige Empfangssignal ein globales Maximum aufweist. Ein alternatives Kriterium für die Bestimmung der Resonanzfrequenz ist das Vorliegen eines bestimmten lokalen Maximums oder Minimums. Unter einem bestimmten lokalen Maximum oder Minimum ist das i-te, beispielsweise das erste, zweite oder dritte, der bei der Aufnahme des Empfangssignals auftretenden N lokalen Maxima oder Minima zu verstehen.

Zur Bestimmung einer Messfrequenz, bei welcher eine vorgebbare Phasenverschiebung zwischen Sendesignal und Empfangssignal vorliegt, wird eine Anforderung an die während des jeweiligen Frequenzsweeps vorliegende Phasenverschiebung zwischen Sendesignal und Empfangssignal als Kriterium aufgestellt. In der Regel existieren mehrere Frequenzen, bei welcher eine bestimmte Phasenverschiebung auftritt, sodass für eine eindeutige Bestimmung der Erregerfrequenzen f₁, f₂ die Erfüllung eines weiteren Kriteriums erforderlich ist. Vorzugsweise wird aus allen Frequenzen, bei welchen eine vorgegebene Phasenverschiebung vorliegt, diejenige Frequenz f₁ bzw. f₂ bestimmt, bei welcher die entsprechende Amplitude des Empfangssignals am höchsten ist. Dieser Fall ist in der Fig. 3 dargestellt.

Für den Fall, dass die Phasenverschiebung zu 90° vorgegeben wird und die Dämpfung so gering ist, dass Eigenfrequenz und Resonanzfrequenz der schwingfähigen Einheit übereinstimmen, fallen die mittels den genannten unterschiedlichen Kriterien bestimmten Messfrequenzen fₘ zusammen und entsprechen der Frequenz, bei welcher das ideale Empfangssignal IE das Maximum besitzt.

Neben den beispielhaft genannten Kriterien sind selbstverständlich auch weitere Kriterien zum Auffinden zweier symmetrisch um die zu ermittelnde Messfrequenz fₘ angeordneter Erregerfrequenzen f₁, f₂ aufstellbar. Die Wahl des am besten geeigneten Kriteriums bzw. der am besten geeigneten Kombination mehrerer Kriterien hängt letztlich von der zu ermittelnden Messfrequenz fₘ - beispielsweise Resonanzfrequenz oder Frequenz bei welcher eine bestimmte Phasenlage besteht, insbesondere Eigenfrequenz - sowie von der Ausgestaltung der Elektronikeinheit und den zur Verfügung stehenden Auswertealgorithmen ab.

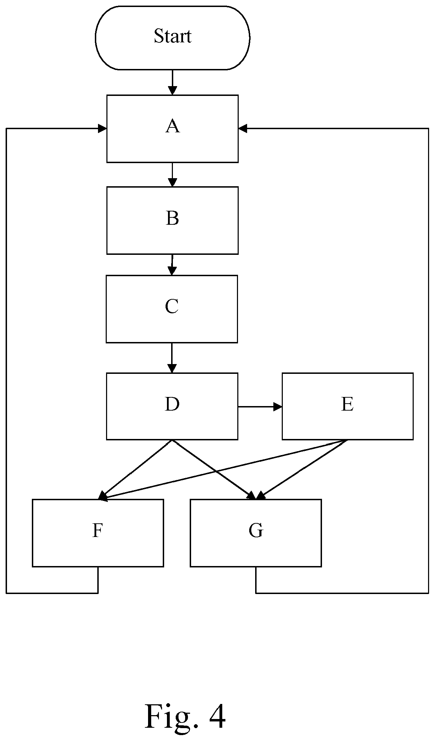

Eine konkrete Ausgestaltung des erfindungsgemäßen Verfahrens soll im Folgenden an Hand des in Fig. 4 dargestellten Flussdiagramms näher erläutert werden. Als Messfrequenz fₘ soll diejenige Frequenz bestimmt werden, bei welcher zwischen Sendesignal und Empfangssignal eine vorgebbare Phasenverschiebung von 90° besteht.

In einem ersten Schritt A werden die Parameter der beiden durchzuführenden Frequenzsuchläufe, sowie die Eigenschaft der zu bestimmende Messfrequenz fₘ festgesetzt. Die Eigenschaft der Messfrequenz fₘ besteht in diesem Fall darin, dass bei der Messfrequenz fₘ eine Phasenverschiebung von 90° zwischen Sendesignal und Empfangssignal vorliegt. Der Algorithmus zur Auswertung der Empfangssignale wird entsprechend festgelegt bzw. die Kriterien entsprechend aufgestellt. Das Frequenzband, in welchem die gesuchte Messfrequenz fₘ liegt, ist beispielsweise durch die Geometrie der schwingfähigen Einheit vorgegeben und daher bekannt. Weiterhin werden die Schrittweite, d.h. der Abstand zwischen zwei angeregten Frequenzen, und die Sweepzeit, d.h. die Zeit, welche für einen Frequenzsuchlauf aufgebracht wird, festgelegt. Über die Schrittweite ist die Auflösung des aufgenommenen Empfangssignals vorgebbar.

In einem zweiten Schritt B erfolgt die Anregung der schwingfähigen Einheit 2 mit einem ersten Frequenzsuchlauf in aufsteigender Richtung, d.h. mit der niedrigsten Frequenz des Frequenzbands beginnend. Ebenso könnte mit einem absteigenden Sweep begonnen werden. Gleichzeitig wird das hierbei empfangene Empfangssignal E⁺ abgetastet und verarbeitet. Die Auswertung erfolgt vorteilhaft mit dem in der DE 102009028022 A1 beschriebenen Algorithmus. Mittels der dort beschriebenen phasenselektiven Abtastung wird ein berechnetes Empfangssignal erzeugt, aus dessen Maxima alle Frequenzen bestimmbar sind, bei welchen für das gemessene Empfangssignal die vorgegebene Phasenverschiebung zwischen Sendesignal und Empfangssignal, in diesem Beispiel 90°, besteht. Ein derart berechnetes Empfangssignal ist in der Fig. 3 dargestellt. Aus allen Frequenzen, welche die Phasenbedingung erfüllen, wird diejenige Erregerfrequenz - erste Erregerfrequenz f₁ genannt - ermittelt, bei welcher das Empfangssignal bzw. das berechnete Empfangssignal die größte Amplitude besitzt.

In einem nächsten Schritt C wird ein zweiter Frequenzsuchlauf mit den gleichen Parametern wie der erste Frequenzsuchlauf, jedoch in absteigender Richtung, durchgeführt. Mit anderen Worten sind Frequenzband, Schrittweite und Sweepzeit gleich. Lediglich die Richtung, in welcher das Frequenzband durchlaufen wird, ist von dem ersten Frequenzsuchlauf verschieden. Das während des zweiten Frequenzsuchlaufs aufgenommene Empfangssignal E⁻ wird in gleicher Weise wie das zuvor aufgenommene Empfangssignal E⁺ ausgewertet und die zweite Erregerfrequenz f₂ analog zur ersten Erregerfrequenz f₁ ermittelt.

Im nächsten Schritt D wird aus der ersten Erregerfrequenz f₁ und der zweiten Erregerfrequenz f₂ die gesuchte Messfrequenz fₘ bestimmt, indem der Mittelwert der beiden ermittelten Erregerfrequenzen, (f₁+f₂)/2, gebildet wird.

Fakultativ wird in einem nächsten Schritt E die Differenz f₁-f₂ zwischen erster Erregerfrequenz f₁ und zweiter Erregerfrequenz f₂ bestimmt und hiermit der Dämpfungsgrad D des Mediums 3 ermittelt. Hieraus kann die Viskosität des Mediums 3 ermittelt werden, sofern die schwingfähige Einheit 2 während der Sweeps mit Medium 3 bedeckt ist, oder eine Aussage über den Zustand der schwingfähigen Einheit 2 in Bezug auf Ansatz oder Korrosion getroffen werden, sofern die schwingfähige Einheit 2 unbedeckt schwingt.

In einer ersten Variante folgt auf die Bestimmung der Messfrequenz fₘ in einem Schritt F die Anregung der schwingfähigen Einheit 2 zumindest für eine gewisse Zeitdauer mit der Messfrequenz fₘ. Aus dem bei monofrequenter Anregung gewonnenen Empfangssignal wird dann mindestens eine Prozessgröße bestimmt oder überwacht, beispielsweise an Hand der Amplitude und/oder der Messfrequenz fₘ. Beispielsweise kann der Füllstand an Hand der Messfrequenz fₘ und der zugehörigen Amplitude bestimmt oder überwacht werden. Das Verfahren zur Messfrequenzbestimmung kann beispielsweise in regelmäßigen Abständen erneut durchgeführt werden.

In einer zweiten Variante schließt sich an die Bestimmung der Messfrequenz fₘ als nächster Schritt G die Auswertung der Messfrequenz fₘ in Bezug auf eine Prozessgröße, beispielsweise die Dichte oder den Füllstand, an. Hierauf folgt ein erneuter Durchlauf, d.h. die erneute Durchführung eines aufsteigenden und eines absteigenden Frequenzsuchlaufs, die Ermittlung der beiden Erregerfrequenzen f₁, f₂ und die Bestimmung der Messfrequenz fₘ. In diesem Fall werden also quasi kontinuierlich Sweeps durchgeführt.

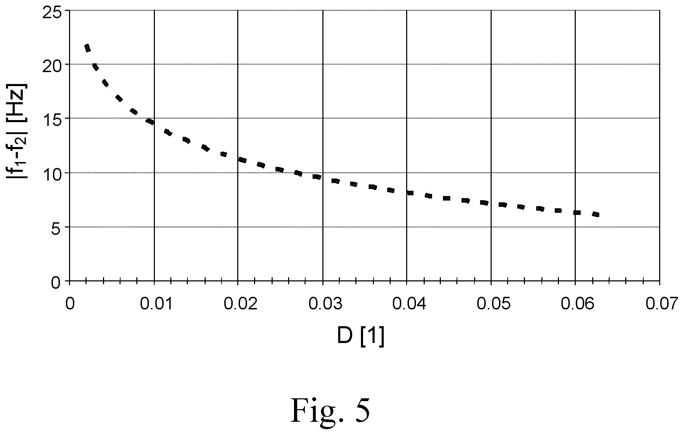

In Fig. 5 ist die Abhängigkeit des Betrags der Differenz |f₁-f₂| aus erster Erregerfrequenz f₁ und zweiter Erregerfrequenz f₂ von dem Dämpfungsgrad D, auch Lehrsches Dämpfungsmaß genannt, illustriert. Je geringer die Dämpfung der Schwingungen ist, desto stärker sind die auftretenden Modulationen und desto größer ist der Abstand zwischen der ersten Erregerfrequenz f₁ und der zweiten Erregerfrequenz f₂.

Aus der Differenz |f₁-f₂| der beiden Erregerfrequenzen, welche mittels zweier in entgegengesetzter Richtung durchgeführten Frequenzsuchläufe ermittelt wurden, ist somit der Dämpfungsgrad D messbar. Dieser ist ein Maß für die Viskosität des Mediums. Vorzugsweise wird in der Elektronikeinheit des Messgerätes, beispielsweise in Form einer Kennlinie, Formel oder Tabelle, ein Zusammenhang zwischen Frequenzdifferenz und Viskosität hinterlegt. Während des Betriebs des Messgerätes kann dann die Frequenzdifferenz |f₁-f₂| zwischen erster Erregerfrequenz f₁ und zweiter Erregerfrequenz f₂ ermittelt und hieraus die Viskosität des Mediums bestimmt werden. Eine derartige Viskositätsbestimmung ist besonders vorteilhaft, da die Viskosität quasi beiläufig bestimmbar ist, während mittels der Messfrequenz fₘ eine andere Prozessgröße, insbesondere viskositätsunabhängig, ermittelbar ist.

Der Dämpfungsgrad D ermöglicht weiterhin eine Diagnose des Zustands der schwingfähigen Einheit. Hierzu wird beispielsweise der zeitliche Verlauf des Dämpfungsgrades D bei der Schwingung in Luft überwacht oder ein aktueller Dämpfungsgrad D mit einem Ausgangswert verglichen. Der Ausgangswert kann beispielsweise bei der Inbetriebnahme der Vorrichtung ermittelt werden. Hat sich Ansatz an der schwingfähigen Einheit gebildet, ist die Dämpfung der Schwingungen höher als ohne Ansatz. Über die Bestimmung der Frequenzdifferenz ist somit auch eine Ansatzerkennung realisierbar. Da sich Ansatz auch auf die Zuverlässigkeit der Bestimmung anderer Prozessgrößen auswirkt, ermöglicht die Ansatzerkennung die Gewährleistung der zuverlässigen Messung. Bei Ansatzbildung wird vorzugsweise ein Warnsignal an das Bedienpersonal oder eine Leitwarte ausgegeben.

Umgekehrt kann aus einer Abnahme der Dämpfung bei gleich bleibenden Umgebungsparametern auf Korrosion der schwingfähigen Einheit geschlossen werden. Die Auswertung der Frequenzdifferenz |f₁-f₂| ist somit nicht nur für die Viskositätsbestimmung vorteilhaft, sondern gleichermaßen im Hinblick auf Predictive Maintainance.

### Bezugszeichenliste

- 1: Vibronisches Messgerät
- 11: Gehäuse
- 2: Schwingfähige Einheit
- 3: Medium
- 4: Behälter
- 5: Elektronikeinheit
- 6: Antriebs-/Empfangseinheit
- E⁺: Empfangssignal Aufwärtssweep
- E⁻: Empfangssignal Abwärtssweep
- BE⁺: Berechnetes Empfangssignal Aufwärtssweep
- BE⁻: Berechnetes Empfangssignal Abwärtssweep
- IE: Ideales Empfangssignal
- f₁: Erste Erregerfrequenz
- f₂: Zweite Erregerfrequenz
- fₘ: Messfrequenz

## Patentansprüche

1. Verfahren zum Betreiben einer Vorrichtung (1) zur Bestimmung und/oder Überwachung mindestens einer physikalischen Prozessgröße eines Mediums (3) mit einer schwingfähigen Einheit (2),
wobei die schwingfähige Einheit (2) mittels eines ersten Frequenzsuchlaufs innerhalb eines vorbestimmten Frequenzbandes im Arbeitsbereich der schwingfähigen Einheit (2) in Form von Sendesignalen mit aufeinander folgenden diskreten Erregerfrequenzen aufsteigender oder absteigender Frequenz zu Schwingungen angeregt wird, wobei die entsprechenden Schwingungen der schwingfähigen Einheit (2) in Form von Empfangssignalen (E⁺, E⁻) empfangen werden und wobei eine erste Erregerfrequenz (f₁) ermittelt wird, bei welcher während des ersten Frequenzsuchlaufs mindestens ein vorgebbares Kriterium erfüllt ist,
wobei die schwingfähige Einheit (2) mittels eines zweiten Frequenzsuchlaufs innerhalb des vorbestimmten Frequenzbandes in Form von Sendesignalen mit den gleichen aufeinander folgenden diskreten Erregerfrequenzen zu Schwingungen angeregt wird, wobei das Frequenzband verglichen mit dem ersten Frequenzsuchlauf in entgegengesetzter Richtung durchlaufen wird, wobei die entsprechenden Schwingungen der schwingfähigen Einheit (2) in Form von Empfangssignalen (E⁺, E⁻) empfangen werden und wobei eine zweite Erregerfrequenz (f₂) ermittelt wird, bei welcher während des zweiten Frequenzsuchlaufs das mindestens eine vorgebbare Kriterium erfüllt ist, und
wobei aus der ersten Erregerfrequenz (f₁) und der zweiten Erregerfrequenz (f₂) durch Mittelwertbildung eine Messfrequenz (fₘ) zur Bestimmung und/oder Überwachung mindestens einer Prozessgröße bestimmt wird, wobei die bestimmte Messfrequenz (fₘ) infolge der Mittelwertbildung der ersten Erregerfrequenz (f₁) und der zweiten Erregerfrequenz (f₂) unabhängig ist von Amplituden- oder Phasenfehlern, welche durch Schwebungseffekte in den Empfangssignalen (E⁺, E⁻) auftreten.

2. Verfahren nach Anspruch 1,
**dadurch gekennzeichnet,**
**dass** als Messfrequenz (fₘ) die Resonanzfrequenz oder eine Frequenz, bei welcher eine vorgebbare Phasenverschiebung zwischen Sendesignal und Empfangssignal vorliegt, insbesondere die Eigenfrequenz der schwingfähigen Einheit (2), ermittelt wird.

3. Verfahren nach Anspruch 1 oder 2,
**dadurch gekennzeichnet,**
**dass** als Kriterium für die Bestimmung der ersten Erregerfrequenz (f₁) und der zweiten Erregerfrequenz (f₂) das Vorliegen einer maximalen oder minimalen Amplitude und/oder einer bestimmten Phasenverschiebung zwischen dem Sendesignal und dem Empfangssignal (E) vorgegeben werden.

4. Verfahren nach einem der vorangehenden Ansprüche,
**dadurch gekennzeichnet,**
**dass** die Differenz zwischen der ersten Erregerfrequenz (f₁) und der zweiten Erregerfrequenz (f₂) ermittelt wird und
**dass** aus der Differenz zwischen der ersten Erregerfrequenz (f₁) und der zweiten Erregerfrequenz (f₂) der Dämpfungsgrad der Schwingungen bestimmt wird.

5. Verfahren nach Anspruch 4,
**dadurch gekennzeichnet,**
**dass** aus dem Dämpfungsgrad der Schwingungen die Viskosität des Mediums (3) bestimmt wird.

6. Verfahren nach Anspruch 4 oder 5,
**dadurch gekennzeichnet,**
**dass** an Hand des Dämpfungsgrades bei einer Schwingung in Luft ermittelt wird, ob Ansatz an der schwingfähigen Einheit (2) anhaftet oder ob die schwingfähige Einheit (2) von Korrosion betroffen ist.

7. Verfahren nach Anspruch 5 oder 6,
**dadurch gekennzeichnet,**
**dass** der zeitliche Verlauf des Dämpfungsgrades überwacht wird, und hieraus eine Änderung der Viskosität oder eine Ansatzbildung oder Korrosionsbildung detektiert wird.

8. Verfahren nach einem der Ansprüche 1 bis 7,
**dadurch gekennzeichnet,**
**dass** die schwingfähige Einheit (2) nach dem Bestimmen der Messfrequenz (fₘ) zur Bestimmung und/oder Überwachung mindestens einer Prozessgröße zu Schwingungen mit der Messfrequenz (fₘ) angeregt wird.

9. Verfahren nach einem der Ansprüche 1 bis 7,
**dadurch gekennzeichnet,**
**dass** nach dem Bestimmen der Messfrequenz (fₘ) die Messfrequenz (fₘ) in Bezug auf mindestens eine Prozessgröße ausgewertet wird und ein nächster erster und zweiter Frequenzsuchlauf zur erneuten Ermittlung der Messfrequenz (fₘ) durchgeführt werden.

10. Verfahren nach einem der vorangehenden Ansprüche,
**dadurch gekennzeichnet,**
**dass** als Prozessgröße mindestens eine der Größen aus der Gruppe gebildet aus Füllstand, Dichte, Viskosität, Massedurchfluss und Volumendurchfluss bestimmt und/oder überwacht wird.

11. Vorrichtung (1) zur Durchführung des Verfahrens nach einem der vorangehenden Ansprüche, mit einer mechanisch schwingfähigen Einheit (2), mit einer Antriebs-/Empfangseinheit (6), welche die schwingfähige Einheit (2) mittels Sendesignalen zu mechanischen Schwingungen anregt und Schwingungen von der schwingfähigen Einheit (2) empfängt und in elektrische Empfangssignale (E⁺, E⁻) umwandelt, und mit einer Elektronikeinheit (5), welche zumindest die Empfangssignale (E⁺, E⁻) auswertet.

## Claims

1. Procedure to operate an apparatus (1) to determine and/or monitor at least one physical process variable of a medium (3) with a unit capable of vibrating (2), wherein the unit capable of vibrating (2) is excited to vibrate by means of a first frequency scan within a predefined frequency range in the operating range of the unit capable of vibrating (2) in the form of transmission signals with consecutive discrete excitation frequencies of an increasing or decreasing frequency, wherein the corresponding vibrations of the unit capable of vibrating (2) are received in the form of reception signals (E⁺, E⁻) and a first excitation frequency (f₁) is determined at which at least a predefinable criterion is met during the first frequency scan, wherein the unit capable of vibrating (2) is excited to vibrate by means of a second frequency scan within the predefined frequency range in the form of transmission signals with the same consecutive discrete excitation frequencies, wherein the frequency range is run through in the opposite direction compared to the first frequency scan, wherein the corresponding vibrations of the unit capable of vibrating (2) are received in the form of reception signals (E⁺, E⁻) and wherein a second excitation frequency (f₂) is determined at which at least a predefinable criterion is met during the second frequency scan,
and
wherein a measuring frequency (fₘ) for determining and/or monitoring at least one process variable is determined from the first excitation frequency (f₁) and the second excitation frequency (f₂) by forming an average, wherein the measuring frequency (fₘ) determined as a result of averaging the first excitation frequency (f₁) and the second excitation frequency (f₂) is independent of amplitude or phase errors that occur as a result of beat effects in the reception signals (E⁺, E⁻).

2. Procedure as claimed in Claim 1,
**characterized in that**
the resonance frequency or a frequency at which a predefinable phase shift is present between the transmission signal and the reception signal, particularly the natural frequency of the unit capable of vibrating (2), is determined as the measuring frequency (fₘ).

3. Procedure as claimed in Claim 1 or 2,
**characterized in that**
the presence of a maximum or minimum amplitude and/or a certain phase shift between the transmission signal and the reception signal (E) is/are specified as the criterion for determining the first excitation frequency (f₁) and the second excitation frequency (f₂).

4. Procedure as claimed in one of the previous claims,
**characterized in that**
the difference between the first excitation frequency (f₁) and the second excitation frequency (f₂) is determined, and
the degree of attenuation of the vibrations is determined from the difference between the first excitation frequency (f₁) and the second excitation frequency (f₂).

5. Procedure as claimed in Claim 4,
**characterized in that**
the viscosity of the medium (3) is determined from the degree of attenuation of the vibrations.

6. Procedure as claimed in Claim 4 or 5,
**characterized in that**
it is determined whether buildup is present on the unit capable of vibrating (2) or whether the unit capable of vibrating (2) is affected by corrosion on the basis of the degree of attenuation during vibration in air.

7. Procedure as claimed in Claim 5 or 6,
**characterized in that**
the degree of attenuation over time is monitored, and a change in the viscosity or the formation of buildup or corrosion is detected on this basis.

8. Procedure as claimed in one of the Claims 1 to 7,
**characterized in that**
after the determination of the measuring frequency (fₘ), the unit capable of vibrating (2) is excited to vibrate at the measuring frequency (fₘ) in order to determine and/or monitor at least one process variable.

9. Procedure as claimed in one of the Claims 1 to 7,
**characterized in that**
after the determination of the measuring frequency (fₘ), the measuring frequency (fₘ) is evaluated with regard to at least one process variable, and a next first and second frequency scan is performed to determine the measuring frequency (fₘ) again.

10. Procedure as claimed in one of the previous claims,
**characterized in that**
at least one of the variables from the group formed from the level, density, viscosity, mass flow and volume flow is determined and/or monitored as the process variable.

11. Apparatus (1) designed to perform the procedure as claimed in one of the previous claims, with a unit capable of vibrating mechanically (2), with a drive/reception unit (6), which excites the unit capable of vibrating (2) to perform mechanical vibrations by means of transmission signals and receives vibrations from the unit capable of vibrating (2) and converts them to electrical reception signals (E⁺, E⁻), and with an electronics unit (5), which at least evaluates the reception signals (E⁺, E⁻).

## Revendications

1. Procédé destiné à l'exploitation d'un dispositif (1) pour la détermination et/ou la surveillance d'au moins une grandeur de process physique d'un produit (3) avec une unité apte à vibrer (2),
l'unité apte à vibrer (2) étant excitée en vibrations au moyen d'un premier balayage de fréquences à l'intérieur d'une bande de fréquence prédéfinie dans la zone de travail de l'unité apte à vibrer (2) sous la forme de signaux d'émission avec des fréquences d'excitation discrètes consécutives de fréquence croissante ou décroissante, les vibrations correspondantes de l'unité apte à vibrer (2) étant reçues sous la forme de signaux de réception (E⁺, E⁻) et la première fréquence d'excitation (f₁) étant déterminée, fréquence à laquelle au moins un critère prédéfinissable est rempli pendant le premier balayage de fréquences,
l'unité apte à vibrer (2) étant excitée en vibrations au moyen d'un deuxième balayage de fréquences à l'intérieur d'une bande de fréquence prédéfinie sous la forme de signaux d'émission avec les mêmes fréquences d'excitation discrètes consécutives, la bande de fréquence étant parcourue en sens inverse comparé au premier balayage de fréquences, les vibrations correspondantes de l'unité apte à vibrer (2) étant reçues sous la forme de signaux de réception (E⁺, E⁻) et la deuxième fréquence d'excitation (f₂) étant déterminée, fréquence à laquelle au moins un critère prédéfinissable est rempli pendant le deuxième balayage de fréquences,
et
une fréquence de mesure (fₘ) étant déterminée à partir de la première fréquence d'excitation (f₁) et de la deuxième fréquence d'excitation (f₂) par la formation d'une moyenne, en vue de la détermination et/ou de la surveillance d'au moins une grandeur de process, la fréquence de mesure (fₘ) déterminée suite à la formation d'une moyenne de la première fréquence d'excitation (f₁) et de la deuxième fréquence d'excitation (f₂) étant indépendante d'erreurs d'amplitude ou de phase, qui apparaissent en raison d'effets de battement dans les signaux de réception (E⁺, E⁻).

2. Procédé selon la revendication 1,
**caractérisé**
**en ce qu'**est déterminée, comme fréquence de mesure (fₘ), la fréquence de résonance ou une fréquence à laquelle un déphasage prédéfinissable existe entre le signal d'émission et le signal de réception, notamment la fréquence propre de l'unité apte à vibrer (2).

3. Procédé selon la revendication 1 ou 2,
**caractérisé**
**en ce qu'**est spécifié, comme critère pour la détermination de la première fréquence d'excitation (f₁) et la deuxième fréquence d'excitation (f₂), la présence d'une amplitude et/ou d'un déphasage donné entre le signal d'émission et le signal de réception (E).

4. Procédé selon l'une des revendications précédentes,
**caractérisé**
**en ce qu'**est déterminée la différence entre la première fréquence d'excitation (f₁) et la deuxième fréquence d'excitation (f₂), et
**en ce qu'**est déterminé, à partir de la différence entre la première fréquence d'excitation (f₁) et la deuxième fréquence d'excitation (f₂), le degré d'amortissement des vibrations.

5. Procédé selon la revendication 4,
**caractérisé**
**en ce qu'**est déterminée, à partir du degré d'amortissement des vibrations, la viscosité du produit (3).

6. Procédé selon la revendication 4 ou 5,
**caractérisé**
**en ce qu'**est déterminée, au moyen du degré d'amortissement dans le cas d'une vibrations dans l'air, la présence d'un dépôt sur l'unité apte à vibrer (2) ou la présence de corrosion sur l'unité apte à vibrer (2).

7. Procédé selon la revendication 5 ou 6,
**caractérisé**
**en ce qu'**est surveillée l'évolution dans le temps du degré d'amortissement, et en ce qu'un changement de la viscosité ou une formation de dépôt ou de corrosion en est détecté.

8. Procédé selon l'une des revendications 1 à 7,
**caractérisé**
**en ce que** l'unité apte à vibrer (2), après la détermination de la fréquence de mesure (fₘ), est excitée en vibrations à la fréquence de mesure (fₘ) en vue de la détermination et/ou de la surveillance d'au moins une grandeur de process.

9. Procédé selon l'une des revendications 1 à 7,
**caractérisé**
**en ce que**, après la détermination de la fréquence de mesure (fₘ), la fréquence de mesure (fₘ) est évaluée par rapport à l'au moins une grandeur de process, puis un premier et un deuxième balayage de fréquences est effectué en vue de la nouvelle détermination de la fréquence de mesure (fₘ).

10. Procédé selon l'une des revendications précédentes,
**caractérisé**
**en ce qu'**est déterminée et/ou surveillée, comme grandeur de process, au moins l'une des grandeurs du groupe constitué du niveau, de la masse volumique, de la viscosité, du débit massique et du débit volumique.

11. Dispositif (1) destiné à la réalisation du procédé selon l'une des revendications précédentes, avec une unité apte à vibrer mécaniquement (2), avec une unité d'entraînement / de réception (6), laquelle unité excite l'unité apte à vibrer (2) en vibrations mécaniques au moyen de signaux d'émission et reçoit les vibrations de l'unité apte à vibrer (2) et les convertit en des signaux de réception (E⁺, E⁻) électriques, et avec une unité électronique (5), laquelle unité évalue au minimum les signaux de réception (E⁺, E⁻).
